# EUROPEAN PATENT APPLICATION

(11) **EP 4 020 671 A1**
(43) Date of publication of application: **29.06.2022**
(21) Application number: 20217373.8
(22) Date of filing: 28.12.2020
(51) Int. Cl.: H01M 10/6556, H01M 10/6568, H01M 10/613, H01M 10/625, H01M 50/20

(54) **A DEVICE FOR THERMAL REGULATION AND A BATTERY PACK COMPRISING SAID DEVICE**

(71) Applicant: VALEO SYSTEMES THERMIQUES, 78320 Le Mesnil Saint-Denis (FR)
(72) Inventor: DELAFORGE, Laurent, 78322 LE MESNIL SAINT-DENIS CEDEX (FR)
(74) Representative: Valeo Systèmes Thermiques

(57) **Abstract**

A device (100) for thermal regulation, in particular for cooling, for an electrical component capable of releasing heat during its operation, in particular for an electrical energy storage module, the device (100) comprising an inlet (2) and an outlet (3) for a heat exchange fluid, a plurality of circulating channels (5, 6, 15, 16) for the heat exchange fluid, each being connected to the common inlet (2, 12) and outlet (3, 13); wherein the circulating channels (5, 6, 15, 16) form at least two separated flow paths, characterized in that the flow paths have equal lengths for the heat exchange fluid between the inlet (2, 12) and the outlet (3, 13). The device endures symmetric fluid distribution.

## Description

### FIELD OF THE INVENTION

The present invention relates to a device for thermal regulation, in particular for cooling, in particular for an electrical component capable of giving off heat during its operation, in particular a device for cooling at least one battery or battery cells of a motor vehicle.

### BACKGROUND OF THE INVENTION

Vehicle batteries, in particular for electric vehicles or hybrid vehicles, should as much as possible be maintained at the desired temperature, which is why so-called cooling devices for vehicle batteries are used. These cooling devices may include cooling plates through which a cooling liquid circulates. The cooling plates are installed, as far as possible without space, on the outer side of the batteries in order to dissipate the heat or to heat the battery. Cooling devices are known in which the cooling plate is made up of two plate parts, which are normally attached directly to each other. Here, the first plate part is preferably planar, and the second plate part is preferably a stamped or deformed sheet of metal which has meandering depressions. Said depressions are closed by the flat plate part which is fixed to the stamped plate part, so that refrigerant conduits are formed. Patent EP 2 828 922 B1 describes such a device.

In case of battery cooling in a vehicle, the main difficulty with application of direct refrigerant cooling system is the temperature spread inside all the battery modules within a battery pack. All the battery modules should be cooled uniformly. On the other hand, the arrangement of the battery modules has to be adapted to the vehicle architecture. Therefore, both odd and even number of battery modules may need cooling. In many cases the system, and in particular the refrigerant distribution, needs to be tuned in order to control the flow of the refrigerant so that a satisfactory temperature balance can be achieved. This may require long testing times, which may necessitate implementation of throttles or repartitions.

The invention aims to alleviate the abovementioned problems.

### SUMMARY OF THE INVENTION

The object of the invention is, among others, a device for thermal regulation, in particular for cooling, for an electrical component capable of releasing heat during its operation, in particular for an electrical energy storage module, the device comprising an inlet and an outlet for a heat exchange fluid, a plurality of circulating channels for the heat exchange fluid, each being connected to the common inlet and outlet; wherein the circulating channels form at least two separated flow paths, characterized in that the flow paths have equal lengths for the heat exchange fluid between the inlet and the outlet.

Preferably, each flow path is configured to provide a meandering run for the heat exchange fluid.

Preferably, the flow paths extend substantially within a first plane and are symmetric with respect to each other along a first symmetry axis.

Preferably, the device further comprises a connector block, the inlet and the outlet being located on the connector block.

Preferably, the device further comprises an upper plate and a lower plate assembled with the upper plate to form together the plurality of circulation channels for a heat transfer fluid.

In one option, the device comprises a plurality of flat tubes interconnected between at least two manifolds to form the plurality of circulation channels for a heat transfer fluid.

In one option, the device comprises at least four circulating channels, each creating a flow path for the heat exchange fluid, wherein at least a first pair of circulating channels creates paths that are symmetric with respect to each other along a first symmetry axis, and at least a second pair of circulating channels creates paths that are symmetric with respect to each other along a second symmetry axis, the second symmetry axis being perpendicular to the first symmetry axis.

Preferably, the first pair of the circulating channels has inlet and outlet located in the first connector block, while the second pair of the circulating channels has inlet and outlet located in the second connector block, the inlets merging into inlet line and the outlets merging into outlet line.

Another object of the invention is a battery pack comprising a plurality of battery modules and the device as described in one of the example above, wherein the circulating channels run along the plurality of the battery modules to enable heat exchange with the battery modules.

Preferably, the battery modules extend substantially within a second plane B parallel to the first plane A.

Preferably, the battery modules are arranged symmetrically with respect to a third symmetry axis overlapping the first axis of symmetry.

In one option, the number of battery modules is even.

In another option, the number of battery modules is odd.

### BRIEF DESCRITPTION OF DRAWINGS

Examples of the invention will be apparent from and described in detail with reference to the accompanying drawings, in which:
Fig. 1 shows a device according to the invention in a first example;
Fig. 2 shows a battery pack according to the invention in a first example;
Fig. 3 shows a battery pack according to the invention in a second example;
Fig. 4 shows a battery pack according to the invention in a third example;
Fig. 5 presents an exemplary arrangement of connector blocks for the battery pack shown in Fig. 4.

### DETAILED DESCRIPTION OF EMBODIMENTS

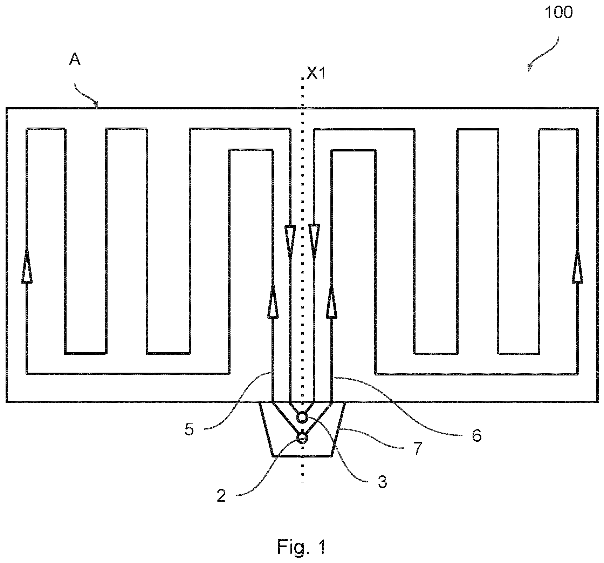

Fig. 1 shows a device 100 according to the invention in a first example. The device 100 is suitable and configured for thermal regulation, in particular for cooling, for an electrical component capable of releasing heat during its operation. This may be in particular an electrical energy storage module. The device 100 comprises an inlet 2 and an outlet 3 for a heat exchange fluid. This may be a refrigerating fluid, in particular a fluid chosen from the following refrigerating fluids: R134a, R1234yf or R744. The device 100 further comprises a plurality of circulating channels 5, 6, for the heat exchange fluid, each being connected to the common inlet 2 and outlet 3. In other words, the inlet 2 is connected to first ends of all the circulating channels 5, 6 and the outlet 3 is connected to second ends of all the circulating channels 5, 6. The circulating channels 5, 6 form at least two separated flow paths. The flow paths have equal lengths for the heat exchange fluid between the inlet 2 and the outlet 3. In other word, the heat exchange fluid starting from the common inlet 2 and split into the plurality of flow paths will travel the same distance in each of the flow paths before exiting through the common outlet 3. In case of application for cooling vehicle batteries, the parallel heat exchange fluid flow allows to balance the temperature within the whole battery pack and avoid any overheating or cold spots on the battery modules. The parallel distribution allows to reduce heat exchange fluid pressure losses.

Preferably, each flow path is configured to provide a meandering run for the heat exchange fluid.

Advantageously, the flow paths extend substantially within a first plane A and are symmetric with respect to each other along a first symmetry axis X1.

The device 100 comprises a connector block 7, with the inlet 2 and the outlet 3 being located on the connector block 7.

The device can comprise an upper plate and a lower plate assembled with the upper plate to form together the plurality of circulation channels 5, 6 for a heat transfer fluid.

Another option if for the device 100 to comprise a plurality of flat tubes interconnected between at least two manifolds to form the plurality of circulation channels 5, 6 for a heat transfer fluid.

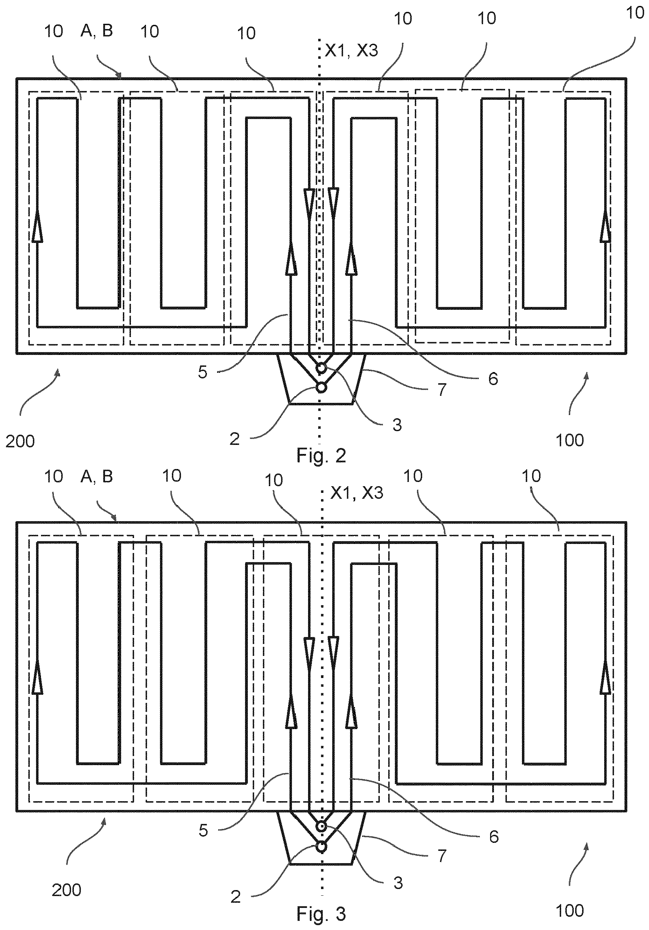

Fig. 2 shows a battery pack 200 according to the invention in a first example. The battery pack 200 as shown comprises a plurality of battery modules 10 and the device 100. The circulating channels 5, 6, run along the plurality of the battery modules 10 to enable heat exchange with them. Preferably, the distance between the battery modules 10 and the device is minimized to facilitate heat exchange. The battery modules 10 can extend substantially within a second plane B parallel to the first plane A. Further, the battery modules 10 may be arranged symmetrically with respect to a third symmetry axis X3 overlapping the first axis of symmetry X1. In the example shown in Fig. 2, the number of battery modules 10 is even.

Fig. 3 shows a battery pack 200 according to the invention in a second example, in which the number of battery modules 10 is uneven.

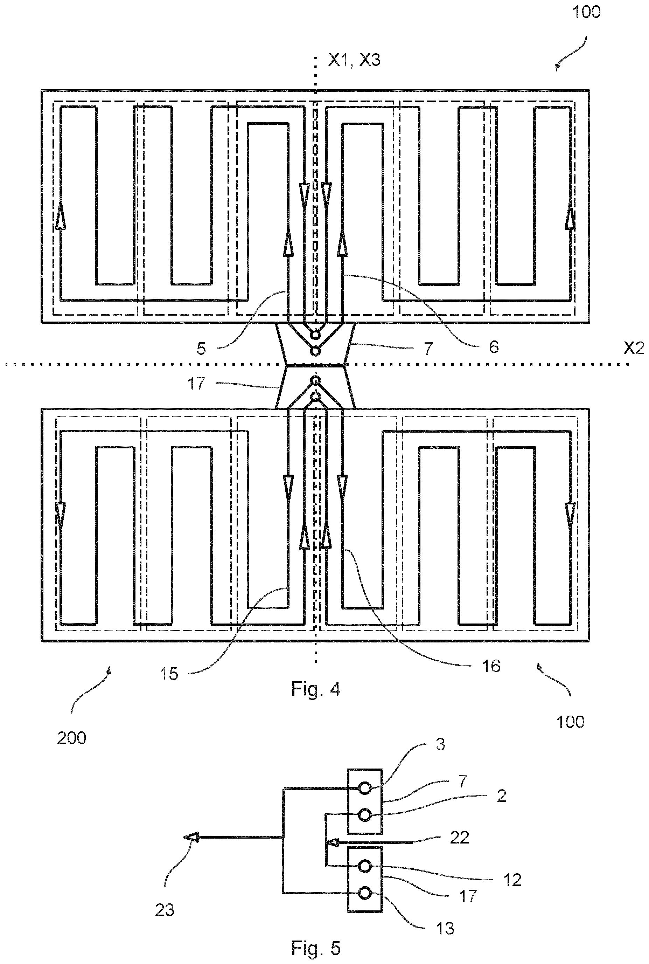

Fig. 4 shows a battery pack 200 according to the invention in a third example. The batter pack 200 comprises at least four circulating channels 5, 6, 15, 16, each creating a flow path for the heat exchange fluid. At least a first pair of circulating channels 5, 6 creates paths that are symmetric with respect to each other along a first symmetry axis X1, and at least a second pair of circulating channels 15, 16 creates paths that are symmetric with respect to each other along a second symmetry axis X2. In this case, the second symmetry axis X2 is perpendicular to the first symmetry axis X1.

Fig. 5 presents an exemplary arrangement of connector blocks 7, 17 for the battery module shown in Fig. 4. The connector blocks 7, 17 are located adjacent to each other, with the inlets 2, 12 and the outlets 3, 13 being located thereon. As can be seen in Fig. 4 in connection with Fig. 5, the first pair 5, 6 of the circulating channels has inlet 2 and outlet 3 located in the first connector block 7, while the second pair 15, 16 of the circulating channels has inlet 12 and outlet 13 located in the second connector block 17. The inlets 2, 12 merge into inlet line 22 and the outlets 3, 13 merging into outlet line 23.

The invention can be implemented in a modular layout to adapt the number of battery modules (odd or even) to be cooled. The invention features a heat exchange fluid flow path distribution which takes into account the pressure losses, in case of refrigerant along the evaporation process inside the circulating channels. The fluid from the superheated areas can be mixed with the fluid from the coldest areas to balance the cooler surface temperature.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A device (100) for thermal regulation, in particular for cooling, for an electrical component capable of releasing heat during its operation, in particular for an electrical energy storage module, the device (100) comprising an inlet (2) and an outlet (3) for a heat exchange fluid, a plurality of circulating channels (5, 6, 15, 16) for the heat exchange fluid, each being connected to the common inlet (2, 12) and outlet (3, 13); wherein the circulating channels (5, 6, 15, 16) form at least two separated flow paths, **characterized in that** the flow paths have equal lengths for the heat exchange fluid between the inlet (2, 12) and the outlet (3, 13).

2. The device (100) according to claim 1, wherein each flow path is configured to provide a meandering run for the heat exchange fluid.

3. The device (100) according to any preceding claim, wherein the flow paths extend substantially within a first plane A and are symmetric with respect to each other along a first symmetry axis X1.

4. The device (100) according to any preceding claim, comprising a connector block (7, 17), the inlet (2, 12) and the outlet (3, 13) being located on the connector block (7, 17).

5. The device (100) according to any preceding claim, comprising an upper plate and a lower plate assembled with the upper plate to form together the plurality of circulation channels (5, 6, 15, 16) for a heat transfer fluid.

6. The device (100) according to any of claims 1-4, comprising a plurality of flat tubes interconnected between at least two manifolds to form the plurality of circulation channels (5, 6, 15, 16) for a heat transfer fluid.

7. The device (100) according to any preceding claim, wherein it comprises at least four circulating channels (5, 6, 15, 16), each creating a flow path for the heat exchange fluid, wherein at least a first pair of circulating channels (5, 6) creates paths that are symmetric with respect to each other along a first symmetry axis X1, and at least a second pair of circulating channels (15, 16) creates paths that are symmetric with respect to each other along a second symmetry axis X2, the second symmetry axis X2 being perpendicular to the first symmetry axis X1.

8. The device (100) according to claim 7, wherein the first pair (5, 6) of the circulating channels has inlet (2) and outlet (3) located in the first connector block (7), while the second pair (15, 16) of the circulating channels has inlet (12) and outlet (13) located in the second connector block (17), the inlets (2, 12) merging into inlet line (22) and the outlets (3, 13) merging into outlet line (23).

9. A battery pack (200) comprising a plurality of battery modules (10) and the device (100) according to any preceding claim, wherein the circulating channels (5, 6, 15, 16) run along the plurality of the battery modules (10) to enable heat exchange with the battery modules (10).

10. The battery pack (200) according to any of claims 3 to 8 and further according to claim 9, wherein the battery modules (10) extend substantially within a second plane B parallel to the first plane A.

11. The battery pack (200) according to claim 9 or 10, wherein the battery modules (10) are arranged symmetrically with respect to a third symmetry axis X3 overlapping the first axis of symmetry X1.

12. The battery pack (200) according to any of claims 9-11, wherein the number of battery modules (10) is even.

13. The battery pack (200) according to any of claims 9-11, wherein the number of battery modules (10) is odd.
